Europäisches Patentamt

European Patent Office

Office européen des brevets

Publication number: **0 289 209**
**A2**

# EUROPEAN PATENT APPLICATION

Application number: 88303586.7

Date of filing: 21.04.88

Int. Cl.4 **B65B 61/18 , B65D 75/62**

Priority: 29.04.87 GB 8710135

Date of publication of application:
02.11.88 Bulletin 88/44

Designated Contracting States:
DE FR GB IT

Applicant: **DU PONT CANADA INC.**
**Box 2200 Streetsville Postal Station**
**Mississauga Ontario L5M 2H3(CA)**

Inventor: **Perrett, Arnold Edward**
**35 Failingbrook Street**
**Whitby Ontario, L1R 1A6(CA)**
Inventor: **Thompson, John Rowson**
**RR No.1**
**Glenburnie Ontario, K0H 1S0(CA)**

Representative: **Ellis, John Clifford Holgate et al**
**MEWBURN ELLIS & CO. 2/3 Cursitor Street**
**London EC4A 1BQ(GB)**

## Easy-open pouch.

An easy open pouch is disclosed wherein adjacent to a transverse end heat seal (30,31) is situated a small compartment (33) at the corner of the pouch. The small compartment (33) has a tear initiating location, e.g. a slit (35) therein, which preferably has a heat seal (36) immediately adjacent to and completely surrounding it. The pouch is preferably made of a film laminate comprising an ethylene/vinyl alcohol copolymer film, an oriented nylon film or an oriented polypropylene film sandwiched between two sealant layers.

A heat sealing element adapted to form the small compartment (33) is also disclosed.

FIG.3

## EASY-OPEN POUCH

The invention relates to pouches filled with flowable materials, e.g. liquids, particularly to pouches made on so-called vertical form and fill machines.

It is well known to package flowable materials, for example, milk, on so-called vertical form and fill machines. Using one such machine, a flat web of synthetic thermoplastic film is unwound from a roll and formed into a continuous tube in a tube forming section, by sealing the longitudinal edges of the film together to form a so-called lap seal or a so-called fin seal. The tube thus formed is pulled vertically downwards to a filling station. The tube is then collapsed across a transverse cross-section of the tube, the position of the cross-section being at a sealing device below the filling station. A transverse heat seal is made, by the sealing device, at the collapsed portion of the tube, thus making an airtight seal across the tube. The sealing device generally comprises a pair of jaws, and one such device is described more fully hereinbelow. After making the transverse seal a quantity of material to be packaged, e.g. liquid, is caused to enter the tube, at the filling station, and fill the tube upwardly from the aforementioned transverse seal. The tube is then caused to move downwardly a predetermined distance. Such movement may be under the influence of the weight of the material in the tube, or may be caused by pulling or mechanically driving the tube. The jaws of the sealing device are closed again, thus collapsing the tube at a second transverse section. The second transverse section may be above, usually just above, the air/material interface in the tube, or the second transverse section may be below the air/material interface. The sealing device seals and severs the tube transversely at the second transverse section. The material-filled portion of the tube is now in the form of a pillow shaped pouch. Thus, the sealing device has sealed the top of the filled pouch, sealed the bottom of the next-to-be formed pouch, all in one operation. One such vertical form and fill machine of the type described above is sold under the trade mark Prepac. With some other machines, the sealing device does not sever the tube at the second transverse section, but does sever the tube subsequently.

For many years, milk has been packaged in pouches made on vertical form and fill machines. Such pouches have been sold to household consumers and, in use, such milk-filled pouches are stood within an open-mouthed pitcher. Conveniently, an upper corner of the pouch is snipped off with scissors or a partially sheathed blade and the snipped-off corner disposed of. More recently, such pouches have been used to package other flowable comestibles. e.g. mayonnaise, salad dressings, preserves and the like. Pouches containing such comestibles are usually sold to "institutional" buyers, e.g. restaurants. For such buyers it is preferred to have an "easy-open" feature on each pouch. It is further preferred not to snip off a corner of the pouch because of the possibility of the snipped-off corner contaminating food. Furthermore, some users of pouched foodstuffs are averse to using cutting implements, scissors, for safety reasons. Prior art methods for making easy-open features have not been entirely suitable for use on vertical form and fill machines. It is an object of the present invention to provide an easy-open feature for vertically formed and filled pouches.

Accordingly, the present invention provides a process for producing pouches from a web of film, said web having longitudinal edges, said film comprising at least one sealant layer, said process comprising the steps of:

1) supplying the web to a tube-forming means;

2) forming the web longitudinally into a tube so that sealant layers at the longitudinal edges of said web are in face-to-face contact, and such that a sealant layer is on the inside of the tube;

3) sealing the contacting layers so that the web forms a longitudinally sealed tube;

4) collapsing the tube to juxtapose portions of the inner sealant layer at an edge portion of the collapsed tube;

5) heat sealing said juxtaposed portions in such a manner to form a small compartment separated from the remaining portion of said tube;

6) forming a tear initiation location in the film within the compartment;

7) flattening the tube transversely at a first position and heat sealing the tube transversely at the flattened position;

8) filling the tube with flowable material, above said first position;

9) flattening the tube at a second position, heat sealing the tube transversely at the second position to form a pouch; and

10) severing the tube at the transversely sealed portion of the tube, such that the pouch is transversely sealed at both ends and contains a small compartment with a tear initiation location therein;

said compartment formation, tear initiation location formation, forming, filling and transverse sealing and severing steps being synchronized such that the tear initiation location is close to a transverse seal.

In one embodiment the tear initiation location is selected from the group consisting of a nick, a slit, a score, a perforation and a thinning in the film.

In a preferred embodiment the tear initiation location is a slit or a perforation and has a heat seal immediately adjacent and completely surrounding said slit or perforation.

In another embodiment the film is one which is easily torn. In particular, it is a film laminate, said laminate being selected from an ethylene/vinyl alcohol copolymer film, an oriented nylon film or an oriented polypropylene film sandwiched between two layers of a sealant film.

In yet another embodiment the sealant layer is made from a polymer selected from an ethylene/vinyl acetate copolymer, a polyethylene, especially a linear low density polyethylene, blends of polyethylenes and blends of at least one polyethylene and an ethylene/vinyl acetate copolymer.

In another embodiment a predetermined quantity of flowable material is introduced into the tube, above the first transverse heat seal, and flattening of the tube at the second position occurs above the predetermined quantity of flowable material such that there is a gas pocket in the pouch, and the tear initiation location is close to the transverse seal and is preferably between the transverse seal and the interface between the gas pocket and the flowable material when the longitudinal axis of the tube is substantially vertical. The gas pocket is often referred to as "head space" by those skilled in the art.

The invention also provides a pouch, made from a heat-sealable film, heat sealed transversely at both ends and having at least one heat sealed longitudinal seam; said pouch also having a small compartment adjacent one of the transverse seals, and separated from the portion of the pouch containing the flowable material by a heat seal which joins the so-called front and back walls of said pouch, said compartment having therein a tear initiation location.

In one embodiment the tear initiation location is selected from the group consisting of a nick, a slit, a score, a perforation and a thinning of said film.

In another embodiment the pouch is made from a film laminate selected from the group consisting of an ethylene/vinyl alcohol film, an oriented nylon film or an oriented polypropylene film sandwiched between two layers of a sealant film.

In another embodiment the pouch contains a gas pocket and is substantially filled with a flowable material.

In a preferred embodiment the tear initiation location is a slit or perforation and there is also a heat seal joining the front and back walls immediately adjacent the slit or perforation, to prevent ingress of foreign matter from outside the pouch into the compartment.

Known vertical form and fill machines may be used for forming a tube from a web of the film used in the present invention, for forming the longitudinal seam. e.g. a so-called back seam, a so-called side seam, a fin seal or a lap seal, for forming the transverse heat seals, for filling and for severing the pouch. However, some modifications are required to form the small compartment and tear initiation location, e.g. slit.

Accordingly the present invention also provides a heat sealing element adapted to simultaneously heat seal two layers of heat sealable synthetic thermoplastic polymers, said heat sealing element comprising i) a U-shaped first element wherein the two leg portions of the U are parallel and close to one another and the unjoined ends of the leg portions are adapted to be connected to an electrical source, and ii) a second element comprising a strip at least partially surrounding and spaced apart from, and in the same plane as, the first element, with unjoined ends of said strip being adapted to be connected to an electrical source.

In one embodiment one of the unjoined ends of the first element and one of the unjoined ends of the second element are joined together and the remaining unjoined ends are adapted to be connected to an electrical source.

In another embodiment the heat sealing element comprises two U-shaped first elements and a second element, said second element at least partially surrounding both first elements and being spaced apart from, and in the same plane as both first elements.

In yet another embodiment the heat sealing element comprises two U-shaped first elements and a second element, said second element at least partially surrounding both first elements and being spaced apart from, and in the same plane as both first elements, said first elements and said second element being connected in series, said heat sealing element having two unjoined ends adapted to be connected to an electrical source.

In another embodiment the leg portions of the first element are straight.

In a further embodiment the heat sealing element is made from a high electrical resistance material, e.g. stainless steel, nickel-chromium alloy.

The present invention also provides a device for making a tear initiation location in a synthetic thermoplastic polymeric film comprising a heat sealing element of the present invention, and means for making a perforation in the film at a location between the leg portions of the U-shaped element, where the U-shaped element would make a seal in the film.

In one embodiment the means for making the perforation is a knife.

In another embodiment the means for making the perforation and the heat sealing element are adapted to operate simultaneously.

The present invention may be further understood by reference to the drawings, in which:

Figure 1 is a plan view of a filling tube and film diverter useful in the process of the present invention;

Figure 2 is a plan view of a preferred compartment sealing device, exaggerated in size with respect to the fill tube and pouch shown therein;

Figure 3 is a three quarter view of the top of one pouch and the bottom of an adjacently-formed pouch, each with an "easy-open" feature of the present invention, formed using the device shown in Figure 4;

Figure 4 is a side view of a preferred embodiment of a heat sealing device for making a compartment, and its location in relation to the film to be sealed; and

Figure 5 is a side view of a further embodiment of a heat sealing device for making a compartment.

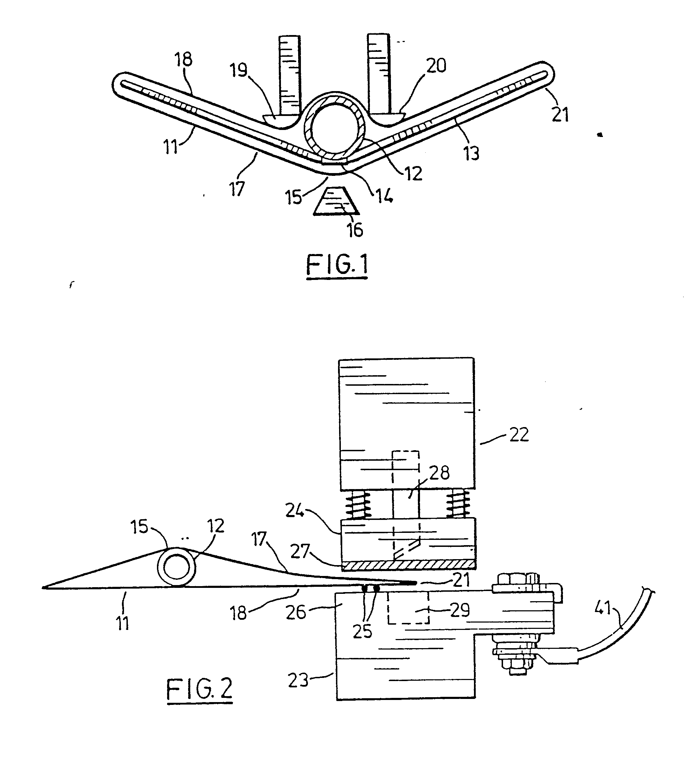

In Figure 1, a web of the film (which may be referred to hereinafter as "the film") has been formed into a tube using a tube-forming mechanism (not shown) such that longitudinal edges of the web 11 overlap. The web 11, now in essentially tubular form, surrounds fill-tube 12 and tube-forming plate 13. Fill-tube 12 may have a heat-seal backing plate 14 thereon for assisting in forming a heat-sealed back seam 15 with a vertical heat sealing jaw 16. It has been found that it is preferable to substantially equalize the lengths of the front wall 17 and back wall 18 of the film tube using film diverters 19 and 20, or similar devices.

Film diverters 19 and 20 may be made of plastic or metal and preferably have low-friction surfaces in contact with the film, e.g. the surfaces in contact with the film being made from acetal resin, or coated with non-stick finish.

Immediately after web 11 passes the end of tube forming plate 13, the substantially flattened edge portion 21 of the tube passes between jaws 23 and 24 of compartment sealing device 22, as shown in Figure 2. One edge of tube forming plate 13 may be cut away suitably in order to accommodate compartment sealing device 22. Jaw 23 comprises an electrical impulse heat sealer 25, mounted on a water-cooled block 26. A layer of polytetrafluoroethylene-impregnated glass fibre tape (not shown) separates the impulse sealer from the sealing jaw 23, as is known in the art. A pad of heat resistant silicone rubber or other flexible back-up material 27 is mounted on the face of jaw 24. The impulse sealer 25 and pad 27 may be prevented from sticking to the film by interposing a layer of glass fibre tape impregnated with polytetrafluoroethylene. Located within jaw 24 are knife blades 28 (only one of which is shown in Figure 2) which are adapted to be moved from the position shown to a position in cavity 29 in jaw 23.

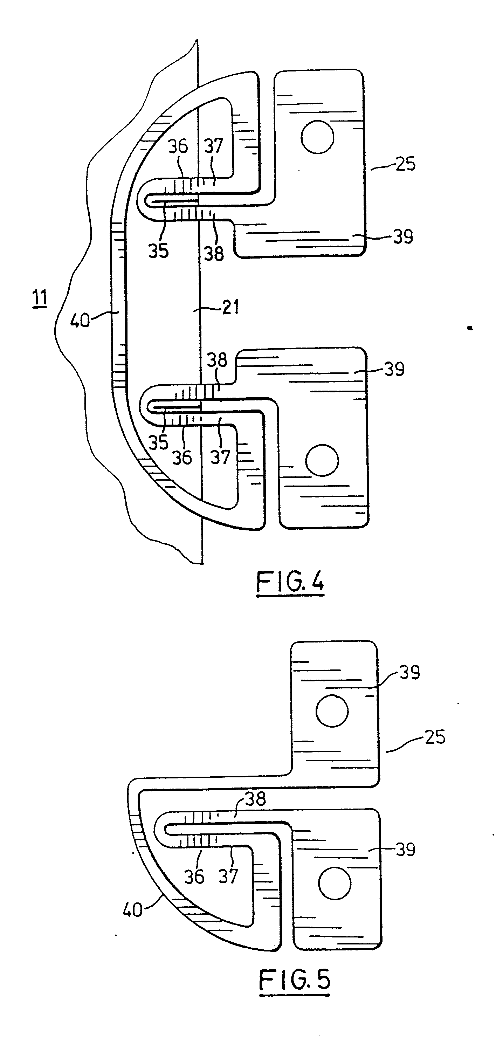

A preferred heat sealing element 25 is shown in Figure 4. First elements to form a seal 36 comprise U-shaped elements with straight leg portions 37 and 38 joined together. One straight leg portion 38 of each U-shaped element is joined to a plate 39, which is adapted to be connected to an electrical connection. The other straight leg portions 37 are connected together by second element 40, which is spaced apart from the U-shaped elements but in the same plane as these elements.

In operation, the flattened edge portion 21 of web 11 is passed between jaws 23 and 24, as shown in Fig. 2. Jaws 23 and 24 are closed, pressing the front and back walls 17 and 18 of the film between the impulse sealer 25 and pad 27. The location of the heat sealing element 25 relative to the edge portion 21 of the film is also shown in Figure 4. Knife blades 28 are then thrust through the edge portion 21 of the film to form slits 35. It is preferred that heat seal 36 is cooled sufficiently before knife blade 28 is actuated to cut web 11, so that the cut is made cleanly. An electrical impulse, fed through electrical connections 41 (see Figure 2), heats the impulse sealer 25 sufficiently to seal the inner layers of sealant film together. The sealing jaws 23 and 24 remain closed for a brief cooling period, before then being opened. It will be understood by those skilled in the art that the heat sealing device for the small compartment may be of the constant heat type rather than of the impulse type, although the impulse type is much preferred for operational efficiency.

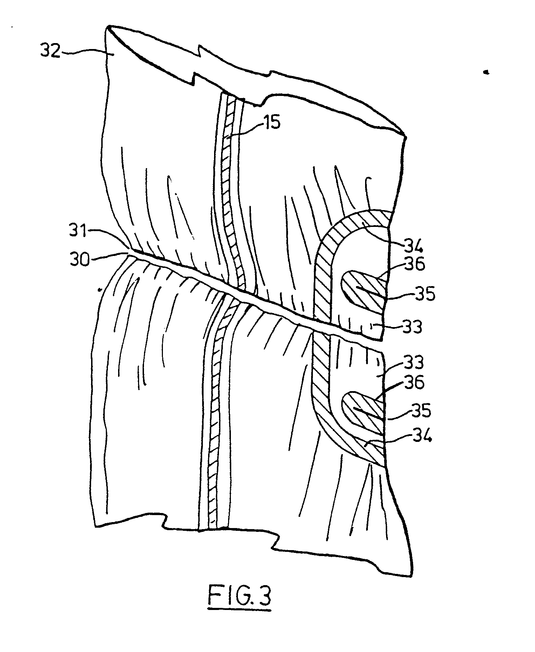

The tubular film is then advanced, downwardly, past the lower end of fill tube 12 to a transverse impulse sealer. The transverse impulse sealer is constructed and operated as is known in the art and is used to heat seal and sever the tube transversely. After forming transverse seals 30, 31 as shown in Figure 3, the upper tube 32 is filled with flowable material through fill tube 12. The upper tube 32 may be filled with a predetermined quantity of flowable material to a position in the tube which permits a gas, e.g. air, nitrogen, pocket (not shown) to be trapped in the upper part of the pouch. Alternatively, the flowable material may be filled to a position in the tube wherein no gas is trapped in the pouch. Filling of the tube may be continuous or intermittent, depending, in some measure, upon the physical and chemical characteristics of the flowable material and the ease of heat sealing the film. The small compartment 33 is formed by heat seal 34, using the apparatus described hereinbefore (Figures 2 and 4), or similar. The seal 34 is intended to separate the slit 35 from the contents of the pouch to keep the contents within the pouch until required. The seal 36 surrounding the slit is intended to prevent ingress of material, e.g. water, food, bacteria, from entering and contaminating the interior of compartment 33. It will be apparent to those skilled in the art that operation of the device for making the small compartment and the tear initiation location and of the transverse heat sealer may be synchronized so that there is a small compartment at both ends of each pouch or, alternatively, a small compartment at only one end of each pouch. For example, jaws 23 and 24 may be operated once for every two operations of the transverse heat sealing jaws, thus forming only one small compartment and tear initiation location in each pouch.

The small compartment 33 may also be made using a heat sealing element such as that shown in Figure 5. Reference numerals 25, and 36-40 identify similar parts shown in Figure 4.

Other apparatus may be used to form the pouches, as will be apparent to those skilled in the art. For example, the transverse seals may be formed using heat sealers other than impulse sealers, e.g. constant heat sealers.

The slit 35 may be replaced by at least one perforation, a score or other means suitable for initiating a tear. With certain types of film the slit may also act as a means for directing the tear in a preferred direction. It has been found that a tear, once initiated by pulling the film on either side of slit 35, travels in the preferred direction of tear for the film. The tear is often required to be in a direction parallel to transverse seal 30 or 31. For those films which do not tear preferentially in the transverse direction, the slit would be made in a direction substantially parallel to transverse seal 30 or 31, if a transverse tear was desired. For film composites which do tear preferentially in the transverse direction it is not critical in which direction the slit points, although for convenience it is normally in the direction parallel to the transverse seals. In addition, the tear will, in many cases, stop at seam 15 (see Figure 3). This is advantageous in that the torn portion of the pouch adjacent to the transverse seal will not separate from the pouch. The torn portion may provide a convenient "handle" while pouring out the contents of the pouch and therefore the torn portion may not be inadvertently dropped into the flowable material, e.g. mayonnaise, after the flowable material has been dispensed from the pouch. This is an important feature for health reasons, and customer satisfaction.

The term "flowable material" does not include gases but encompasses materials which are flowable under gravity, may be pumped or otherwise transported through tubes. Such materials include emulsions, e.g. ice cream mix; soft margarine; food dressings; pastes, e.g. meat pastes; peanut butter; preserves, e.g. jams, pie fillings, marmalade; jellies; dough; ground meat, e.g. sausage meat; powders, e.g. gelatin powders; detergents; liquids, e.g. milk, oils; granular solids, e.g. rice, sugar; and mixtures of liquids and solids, e.g. chunky soup, cole slaw, macaroni salad, fruit salad, sliced pickles, cherry pie filling.

The film webs preferred in the present invention may be made by conventional techniques of adhesive lamination. The film may be made from one layer of a sealant film adhesively laminated to a film selected from ethylene/vinyl alcohol copolymer film, oriented or unoriented nylon film, oriented polypropylene or polyester film. The film may also be made by adhesively laminating outer sealant films to a central film of ethylene/vinyl alcohol copolymer film, oriented or unoriented nylon film, oriented polypropylene or polyester film. Preferred sealant films are polyethylene films, ethylene/vinyl acetate copolymer films and films of blends of at least one polyethylene and ethylene/vinyl acetate copolymer. Preferred polyethylene sealant layers are made from linear low density polyethylene, preferably copolymers of ethylene and at least one $C_4$ to $C_{10}$ alpha-olefin, especially ethylene/hexene-1 or ethylene/octene-1 copolymers. Some of these film laminates tend to tear more readily in the transverse direction, e.g. machine direction oriented nylon film having at least one side laminated to a low density polyethylene film.

The film webs may also be made from coextrusions. The structure of the webs may comprise an outer sealant layer coextruded with a central layer of a thermoplastic polymeric material, e.g. nylon, ethylene/vinyl alcohol copolymer, or one layer of the sealant layer and one layer of the thermoplastic polymeric layer.

The three-layer laminates or coextrusions referred to above are particularly suitable for pouches with a longitudinal lap seal, while the two-layer laminates or coextrusions are particularly suitable for pouches with a longitudinal fin seal. The end use for the pouch tends to dictate, in a large degree, the selection of the non-sealant layer in the film web. For example, nylon may be used as the non-sealant layer, for packaging oleaginous substances, e.g. cooking oil, motor oil, while ethylene/vinyl alcohol copolymer film may be used as the non-sealant layer where a flavour or aroma barrier is desirable.

The pouches of the present invention may also be made from film composites which have one of the films coated with metals, e.g. aluminium.

In another embodiment the pouch may be made from two different film composites, one of which forms the so-called back wall of the pouch and the other of which forms the so-called front wall of the pouch. In such case the front and back walls have layers which allow the front and back walls to be heat sealed to one another.

A preferred film composite is a laminate or coextrusion made from 40-60 μm thick linear low density polyethylene layer (sealant layer), 10-15 μm thick ethylene/vinyl alcohol copolymer layer, and 40-60 μm thick linear low density polyethylene layer (sealant layer). When the composite is a laminate the ethylene/vinyl alcohol layer is preferably a biaxially oriented film.

The pouches of the present invention preferably may be from 0.1 to 20 litres capacity, more preferably contain from 0.3 to 5 litres, and especially from 1 to 2 litres.

## Claims

1. A process for producing pouches from a web of film, said web having longitudinal edges, said film comprising at least one sealant layer, said process comprising the steps of:

i) supplying the web to a tube-forming means;

ii) forming the web longitudinally into a tube so that sealant layers at the longitudinal edges of said web are in face-to-face contact, and such that a sealant layer is on the inside of the tube;

iii) sealing the contacting layers so that the web forms a longitudinally sealed tube;

iv) collapsing the tube to juxtapose portions of the inner sealant layer at an edge portion of the collapsed tube;

v) heat sealing said juxtaposed portions in such a manner to form a small compartment separated from the remaining portion of said tube;

vi) forming a tear initiation location in the film within the compartment;

vii) flattening the tube transversely at a first position and heat sealing the tube transversely at the flattened position;

viii) filling the tube with flowable material, above said first position;

ix) flattening the tube at a second position, heat sealing the tube transversely at the second position to form a pouch; and

x) severing the tube at the transversely sealed portion of the tube, such that the pouch is transversely sealed at both ends and contains a small compartment with a tear initiation location therein;

said compartment formation, tear initiation location formation, forming, filling and transverse sealing and severing steps being synchronized such that the tear initiation location is close to a transverse seal.

2) A process according to Claim 1 wherein the tear initiation location is selected from the group consisting of a nick, a slit, a score, a perforation and a thinning in the film.

3) A process according to Claim 2 wherein the tear initiation location is a slit or a perforation and has a heat seal immediately adjacent and completely surrounding said slit or perforation.

4) A process according to any of Claims 1 to 3 wherein the film is a laminate which is easy to tear.

5) A process according to any preceding claim wherein the film is a laminate, said laminate being selected from an ethylene/vinyl alcohol copolymer film, an oriented nylon film or an oriented polypropylene film sandwiched between two layers of a sealant film.

6) A process according to any preceding claim wherein the sealant layer is made from a polymer selected from the group consisting of an ethylene/vinyl acetate copolymer, a polyethylene, blends of polyethylenes, and blends of at least one polyethylene and an ethylene/vinyl acetate copolymer.

7) A process according to any of Claims 1 to 5 wherein the sealant layer is a linear low density polyethylene film.

8) A process according to any preceding claim wherein flattening of the tube at the second position occurs above a predetermined quantity of flowable material such that there is a gas pocket in the pouch, and the tear initiation location is close to the transverse seal and is between the transverse seal and the interface between the gas pocket and the flowable material when the pouch is in a position wherein the longitudinal axis of the tube is substantially vertical.

9) A pouch, made from a heat-sealable film, heat sealed transversely at both ends and having at least one heat sealed longitudinal seam; said pouch containing a flowable material and having a small compartment adjacent one of the transverse seals, separated from the portion of the pouch containing the flowable material by a heat seal which joins the so-called front and back walls of said pouch, said compartment having therein a tear initiation location.

10) A pouch according to Claim 9 wherein the tear initiation location is selected from the group consisting of a nick, a slit, a score, a perforation and a thinning of said film.

11) A pouch according to Claim 9 or Claim 10 wherein the pouch is made from a film laminate selected from an ethylene/vinyl alcohol film, an oriented nylon film or an oriented polypropylene film sandwiched between two layers of a sealant film.

12) A pouch according to any of Claims 9 to 11 wherein the pouch contains a gas pocket and is substantially filled with a flowable material.

13) A pouch according to any of Claims 9 to 12 wherein the tear initiation location is a slit or perforation and there is also a heat seal joining the front and back walls immediately adjacent the slit or perforation, to prevent ingress of foreign matter from outside the pouch into the compartment.

14) A pouch according to any of Claims 9 to 13 wherein the pouch is made from two different film composites, one of which forms the so-called back wall of the pouch and the other of which forms the so-called front wall of the pouch.

15) A heat sealing element adapted to simultaneously heat seal two layers of synthetic thermoplastic polymers, said heat sealing element comprising i) a U-shaped first element wherein the two leg portions of the U are parallel and close to one another and the unjoined ends of the leg portions are adapted to be connected to an electrical source, and ii) a second element comprising a strip at least partially surrounding and spaced apart from, and in the same plane as, the first element, with unjoined ends of said strip being adapted to be connected to an electrical source.

16) A heat sealing element according to Claim 15 wherein one of the unjoined ends of the first element and one of the unjoined ends of the second element are joined together and the remaining unjoined ends are adapted to be connected to an electrical source.

17) A heat sealing element according to Claim 15 comprising two U-shaped first elements and a second element, said second element at least partially surrounding both first elements and being spaced apart from, and in the same plane as both first elements.

18) A heat sealing element according to Claim 17 wherein said first elements and said second element are connected in series, and said heat sealing element has two unjoined ends adapted to be connected to an electrical source.

19) A heat sealing element according to any of Claims 15 to 18 wherein the heat sealing element is made from stainless steel or a nickel-chromium alloy.

20) A device for making a tear initiation location in a synthetic thermoplastic polymeric film comprising a heat sealing element according to any of Claims 15 to 19, and means for making a perforation in the film at a location between the leg portions of the U-shaped element or elements.

21) A device according to Claim 20 wherein the means for making the perforation is a knife.

22) A device according to Claim 20 or Claim 21 wherein the means for making the perforation and the heat sealing element are adapted to operate simultaneously.

FIG.1

FIG.2

32

15

31
30

34
36
35
33

33
36
35
34

FIG.3

FIG. 4

FIG. 5